# EUROPEAN PATENT APPLICATION

(11) **EP 4 650 635 A1**
(43) Date of publication of application: **19.11.2025**
(21) Application number: 24176347.3
(22) Date of filing: 16.05.2024
(51) Int. Cl.: F16K 27/02, F16K 27/04, F16K 31/122

(54) **VALVE, VEHICLE AND METHOD FOR MANAGING AIRFLOW IN A VALVE**

(71) Applicant: ZF CV Systems Europe BV, 1170 Brüssel (BE)
(72) Inventor: PISKADLO, Piotr, 52-311 Wroclaw (PL); MIKOS, Mateusz, 63-600 Kepno (PL); MATELSKI, Patryk, 56-410 Dobroszyce (PL)
(74) Representative: Ohlendorf, Henrike

(57) **Abstract**

The disclosure relates to a valve (20), in particular for controlling a lift axle (30) of a vehicle (10). The valve (20) is a pneumatic valve (44). The valve (20) comprises a housing (46), a chamber (118) configured to hold air (48), a vent (50) for the chamber (118), the vent (50) selectively connecting the chamber (118) with ambient air (52), and a mounting hole (26) in the housing (46). The vent (50) comprises a first airflow path (56) inside and along the mounting hole (26).

## Description

The invention relates to a valve, a vehicle and a method for managing airflow in a valve.

Pneumatic valves are common means for controlling pneumatic actuators of various kinds. For example, commercial vehicles typically comprise a pneumatically actuated level control system, a pneumatic lift axle and/or brakes as well as a set of pneumatic valves for controlling them.

With pneumatic valves, it is a common requirement to regularly exhaust air from parts of the valve to ambient air. One challenge with respect to this requirement is that the inside of the valve must be kept clean, i.e. that dirt, such as dust, mud, and water, from the surroundings must not enter the inside of the valve through the path implemented for exhausting the valve. This is because dirt may increase wear of moving parts and disturb airflow.

A known solution for exhausting a chamber in a solenoid of a valve comprises a vent through a dedicated air channel in a solenoid bracket. For preventing dust and dirt from entering the chamber, the known solution comprises additional components like one-way valves and protection caps or covers.

It is an object of the invention to present a simple and yet effective solution for exhausting air from a chamber of a valve, while preventing dirt from entering the chamber.

The object is achieved by a valve in accordance with claim 1.

The valve may in particular be configured for controlling a lift axle of a vehicle. The valve is a pneumatic valve. The valve comprises a housing, a chamber configured to hold air, a vent for the chamber, the vent selectively connecting the chamber with ambient air, and a mounting hole in the housing. The vent comprises a first airflow path inside and along the mounting hole.

The vent leading through the mounting hole is a simple and yet effective solution for exhausting air, while preventing dirt from entering the chamber. The mounting hole is typically long and comprises a small space between an inner wall of the mounting hole and a mounting element. That reduces the amount of dirt, such as dust, mud, and water reaching the chamber. Furthermore, the mounting hole is typically not completely open at its end. Rather, a head of a mounting element or an opposing structure usually covers the respective end of the mounting hole, which further reduces the amount of dirt reaching the chamber. This solution also does not require additional components for managing airflow, such as an additional one-way valve or protection caps or covers.

The term "vent" refers to the complete airflow path between the chamber and ambient air. The vent comprises a plurality of airflow paths in series and/or in parallel.

According to an embodiment, the valve comprises a head support for a head of a mounting element to be positioned in the mounting hole, wherein the vent comprises a second airflow path through the head support. This embodiment is simple and cost-efficient, since it is relatively simple to manufacture, while common mounting elements can still be used to mount the valve.

A suitable mounting element can, for example, be a screw or a combination of a screw and a nut. Thus, the head support can be a support for a screw head or for a nut or for both when the screw-nut-combination can be used in different orientations.

According to an embodiment, the head support is configured as a protrusion of the housing. This simplifies creating the second airflow path in the head support.

According to an embodiment, the second airflow path is defined by a notch in the head support. This is a simple and yet effective solution.

According to an embodiment, the notch is arranged radially with respect to the mounting hole. This is a simple and yet effective solution.

According to an embodiment, the mounting hole is configured for mounting the valve to a structural element, in particular a structural element of a vehicle. This provides for a secure mounting of the valve at a vehicle.

According to an embodiment, the mounting hole comprises at least one tapered portion. An advantage of this embodiment is that due to the tapered shape, airflow along the tapered portion is directed towards the wider end of the tapered portion. Thus, the embodiment is a simple approach to directing the airflow along the mounting hole.

According to an embodiment, the valve comprises a sleeve for a mounting element to be positioned in the mounting hole, wherein the sleeve is positioned in the mounting hole and wherein the first airflow path is located outside the sleeve. In this embodiment, the first airflow path is configured to go along an exterior surface of the sleeve and between an interior surface of mounting hole, for example defined by the housing, and the exterior surface of the sleeve. An advantage of this embodiment is that a small gap between the interior surface of the mounting hole and the exterior surface of the sleeve can be defined precisely and with simple means. Furthermore, an inside of the sleeve may or may not be part of the vent. The sleeve can, for example, be a tension sleeve and/or a bushing.

According to an embodiment, the sleeve and an interior surface of the mounting hole may form a tight fit at least at one circumference. The tight fit blocks air and thus assists in directing airflow along the desired path.

The valve may comprise a piston. The chamber may comprise a variable volume limited by the piston. The chamber may be configured such that a given motion of the piston changes the volume of the chamber.

The valve may comprise a solenoid. The chamber may be formed within the solenoid. The solenoid may comprise an armature and the chamber may be limited by the armature. The chamber may comprise a variable volume limited by the armature.

The chamber may be configured such that a given motion of the armature changes the volume of the chamber.

While several examples of the location of the chamber in the valve and of elements limiting the chamber have been described above, these can either be alternative examples or can be implemented in the same valve and the vent can be configured for exhausting both chambers. In fact, the valve can comprise a first chamber, the vent selectively connecting the first chamber with ambient air, and a second chamber forming a part of the vent between a first chamber and the ambient air.

The valve may comprise a solenoid and the vent may comprise a third airflow path through the solenoid.

According to an embodiment, the valve is a lift axle control valve. The advantages of the valve described above are highly beneficial in a lift axle control valve.

The object described above is also achieved by a vehicle in accordance with claim 11. The vehicle may in particular be configured as a commercial vehicle trailer. The vehicle comprises a valve as described above.

According to an embodiment, the vehicle comprises a structural element, wherein the valve is mounted to the structural element by a mounting element positioned in the mounting hole. This provides for a secure mounting of the valve.

According to an embodiment, the mounting element comprises a screw. This provides for a particularly simple setup.

According to an embodiment, the vehicle comprises a lift axle and the valve is configured to control the lift axle. The advantages of the valve described above are highly beneficial in a lift axle control valve.

The vehicle can be, for example, a commercial vehicle, a truck, a passenger car or a bus. The vehicle can be, for example, a road vehicle or a rail vehicle. The vehicle can be, for example, a single vehicle, a tractor or a trailer, such as a semi-trailer, for a tractor-trailer combination or a tractor-trailer combination.

The object described above is also achieved by a method in accordance with claim 15 for managing airflow in a valve. The valve may in particular be configured as described above. The valve is a pneumatic valve. The valve comprises a housing, a chamber holding air and a mounting hole in the housing. The method comprises venting the chamber through and along the mounting hole.

If devices and methods are described herein, the methods described can advantageously be developed further by the embodiments and individual features of the devices, and vice versa.

The invention is described in more detail below with reference to examples, which are shown in schematic drawings.
Fig. 1 shows a vehicle.
Fig. 2 shows a valve.
Fig. 3 shows a cross-section of the valve of Fig. 2.
Fig. 4 shows another cross-section of the valve of Figs. 2-3.
Fig. 5 shows a closeup of the solenoid in another cross-section of the valve of Figs. 2-4.
Fig. 6 shows a closeup of the solenoid and the solenoid bracket in another cross-section of the valve of Figs. 2-5.
Fig. 7 shows an element of the valve of Figs. 2-6.
Fig. 8 shows another cross-section of the valve of Figs. 2-7.
Fig. 9 shows a cross-section of a mounting hole of the valve of Figs. 2-8 with a mounting element.
Fig. 10 shows the cross-section of Fig. 9 without the mounting element.
Fig. 11 shows a close-up of the mounting hole of the valve of Figs. 2-10.
Fig. 12 shows a method for managing airflow in a valve.

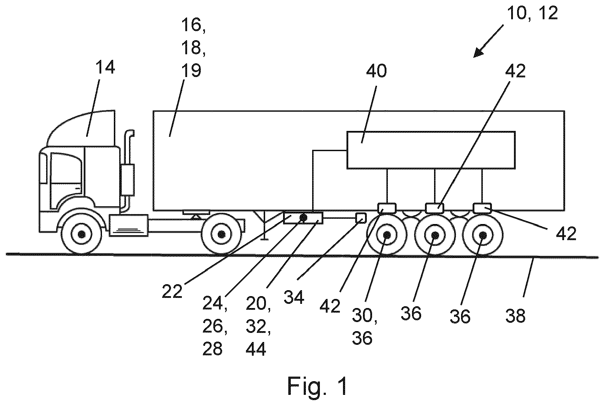

Fig. 1 shows a vehicle 10. In this example, the vehicle 10 is configured as a tractor-trailer combination 12 which comprises a tractor 14 and a trailer 16. The trailer 16 may in particular be configured as a commercial vehicle trailer 18. In Fig. 1, the trailer 16 is a semi-trailer 19. The vehicle 10 comprises a valve 20.

The vehicle 10 comprises a structural element 22, wherein the valve 20 is mounted to the structural element 22 by a mounting element 24 positioned in a mounting hole 26 of the valve 20. The mounting element 24 comprises a screw 28.

The vehicle 10 comprises a lift axle 30. The valve 20 of the vehicle 10 is configured to control the lift axle 30. The valve 20 is a lift axle control valve 32. The lift axle 30 comprises a lift bellow 34 to lift an axle 36 off the ground 38. If used properly, the lift axle 30 can reduce tire wear. The valve 20 can be controlled by a control unit 40. Furthermore, the control unit 40 can control suspension bellows 42 of an air suspension system of the vehicle 20.

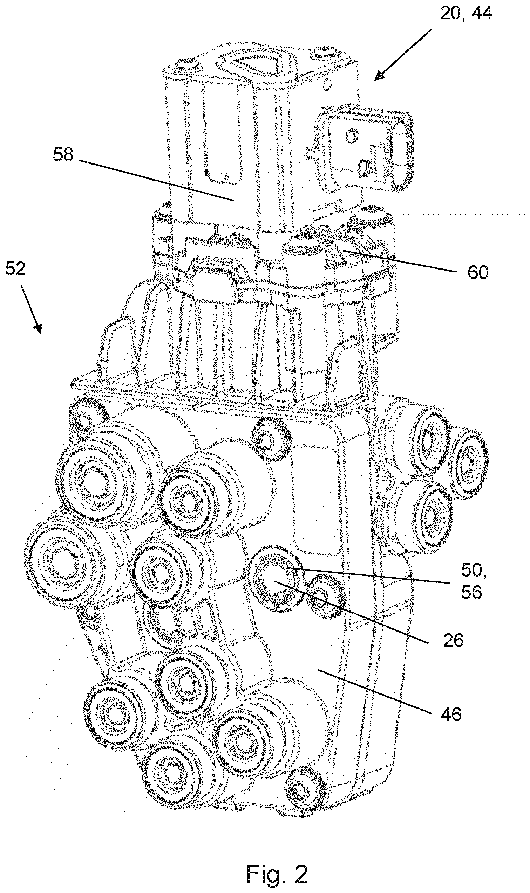

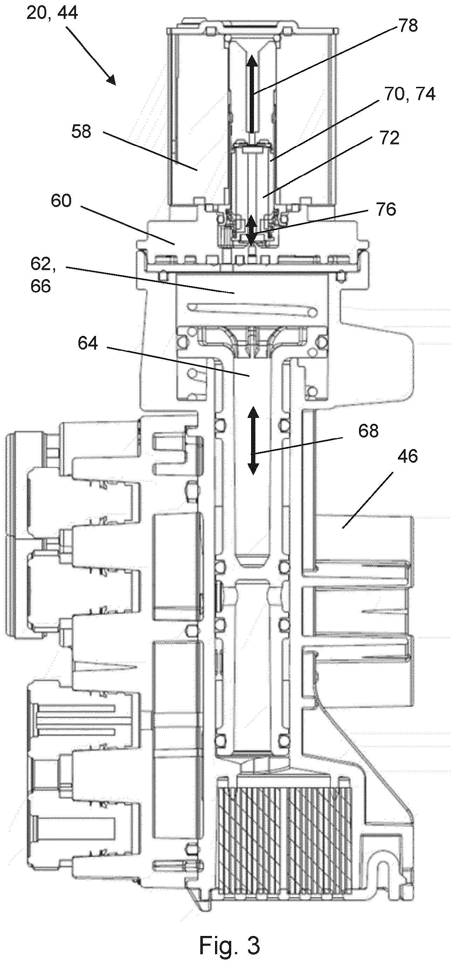

Fig. 2 shows a valve 20. The valve 20 can in particular be used for controlling a lift axle 30 of a vehicle 10 as shown in Fig. 1. The valve 20 is a pneumatic valve 44. The valve 20 comprises a housing 46. Inside, the valve 20 comprises a chamber configured to hold air 48. The valve 20 comprises a vent 50 for the chamber, the vent 50 selectively connecting the chamber with ambient air 52. The valve 20 comprises a mounting hole 26. The vent 50 comprises a first airflow path 56 inside and along the mounting hole 26. The chamber and the vent 50 are located inside the valve 20 and are, thus, better visible in a cross-section of the valve 20 shown in Figs. 3-4 and will be described in more detail below.

The valve 20 can comprise a solenoid 58 as indicated in Fig. 2. Between the solenoid 58 and the housing 46, the valve 20 comprises a solenoid bracket 60. The solenoid 58 and the solenoid bracket 60 are described in more detail below with reference to Figs. 3-7.

Fig. 3 shows a cross-section of the valve 20. The valve 20 comprises a first chamber 62 and a piston 64. The first chamber 62 comprises a variable first volume 66 limited by the piston 64. A given motion 68 of the piston 64 can change the first volume 66 of the first chamber 62.

In the valve 20, a second chamber 70 is formed within the solenoid 58. The solenoid 58 comprises an armature 72. The second chamber 70 is limited by the armature 72. The second chamber 70 comprises a variable second volume 74 limited by the armature 72. A given motion 76 of the armature 72 changes the volume 74 of the second chamber 70. The vent 50 comprises a third airflow path 78 through the solenoid 58.

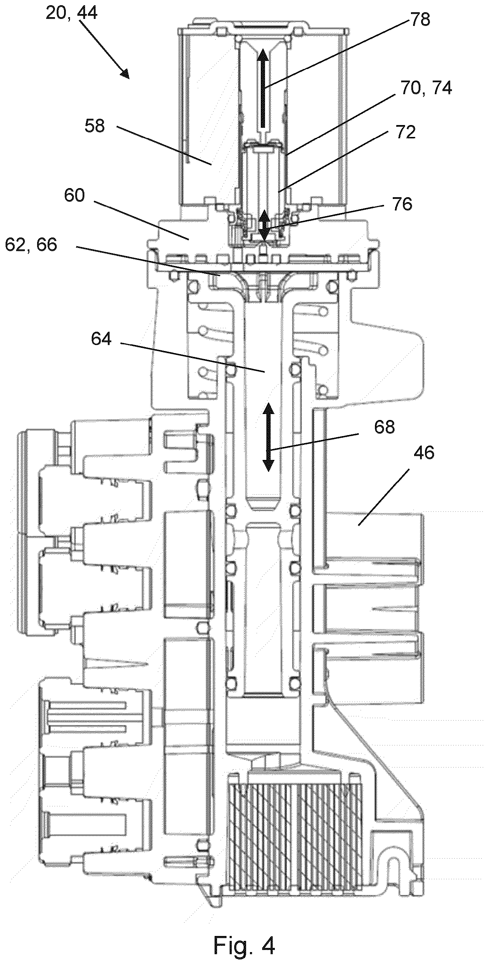

Fig. 4 shows the valve 20 from Figs. 2-3. In Fig. 3 the first variable volume 66 of the first chamber 62 is changed by the motion 68 of the piston 64. By changing the volume 66 of the first chamber 62 through the piston 64, the air 48 is funneled into the third airflow path 78 of the vent 50 to exhaust the air 48 from the first chamber 62 of the valve 20. On the way to the third airflow path 78, the air 48 is guided into and passes through the second chamber 70 in the solenoid 58.

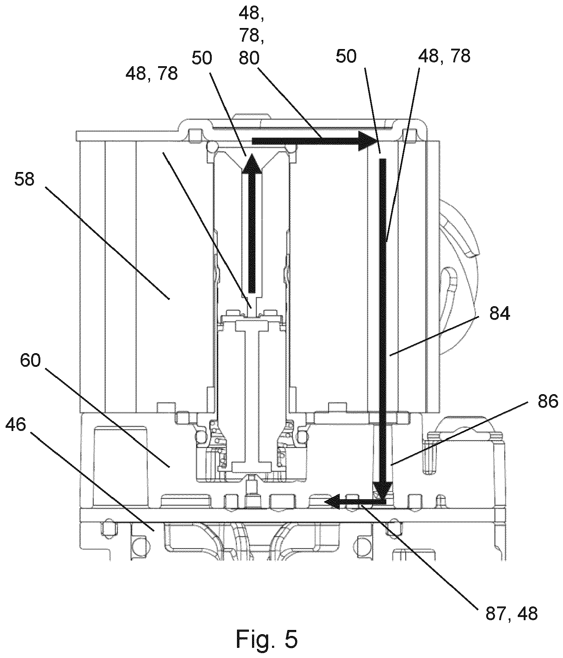

Fig. 5 shows a close-up of the solenoid 58 of the valve 20 in a different cross-section compared to Figs. 3 and 4. The third airflow path 78 through the solenoid 58 is shown in more detail. After the air 48 is guided into the second chamber 70 in the solenoid 58, the air 48 flows through the third airflow path 78 through the solenoid 58.

In particular, the air 48 flows along a notch 80 in a top cover 82 of the solenoid 58 and through a first borehole 84 into the solenoid bracket 60. There, the air 48 flows through a second borehole 86 and a notch 87 into the housing 46 of the valve 20.

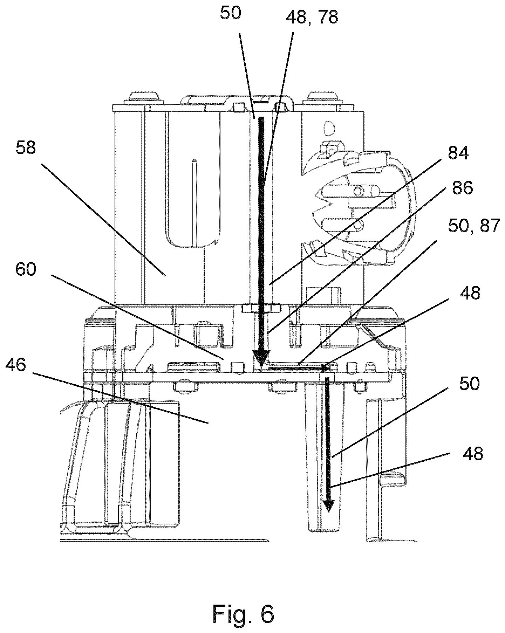

Fig. 6 shows a close-up of the solenoid 58 of the valve 20 in yet another cross-section and in a different perspective compared to Fig. 5. The air 48 that has entered the solenoid bracket 60 flows through the vent 50 in the solenoid bracket 60, through the second bore hole 86, through the notch 87 and into the housing 46 of the valve 20.

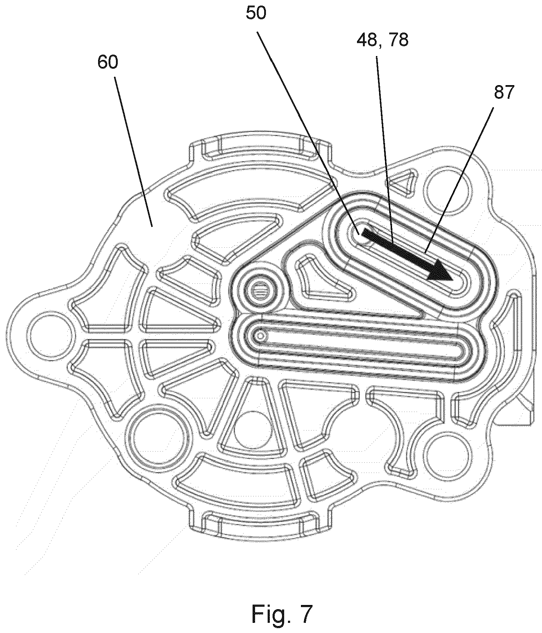

Fig. 7 shows the solenoid bracket 60 of the valve 20 in a perspective in which the notch 87 is better visible.

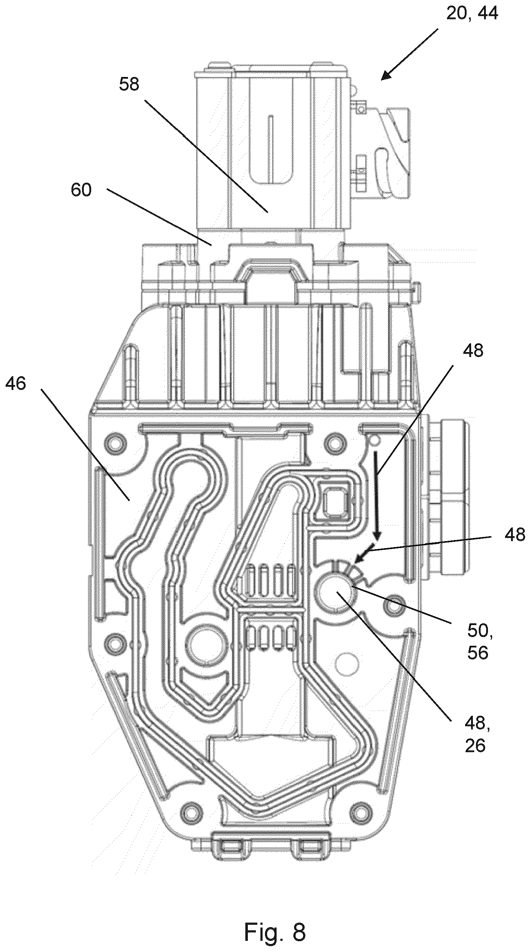

Fig. 8 shows a cross-section of the valve 20, wherein the solenoid 58, the solenoid bracket 60 and the housing 46 of the valve 20 are visible. The housing 46 comprises a part of the vent 50 and a mounting hole 26 for mounting the valve 20. The vent 50 comprises the first airflow path 56 inside and along the mounting hole 26. The air 48 flows through the housing 46 to the mounting hole 26 in a manner not shown in every detail.

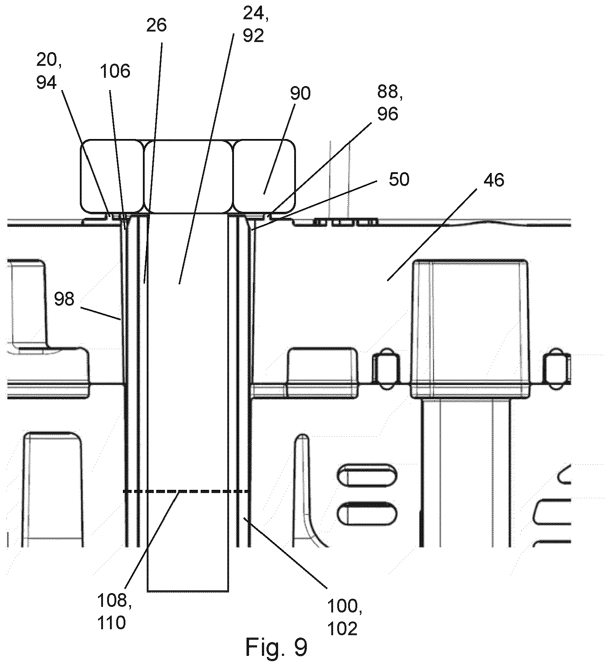

Fig. 9 shows a cross-section of the housing 46 and of the mounting hole 26 of the valve 20. The valve 20 comprises a head support 88 for a head 90 of a mounting element 24 to be positioned in the mounting hole 26. The mounting element 24 can, for example, be a screw 92 as shown in Fig. 9. The mounting hole 26 is configured for mounting the valve 20 to a structural element, such as the structural element 22 of the vehicle 10 of Fig. 1. The mounting hole 26 can comprise at least one tapered portion 98.

The valve 20 comprises a sleeve 100 for the mounting element 24. The sleeve 100 is positioned in the mounting hole 26. The sleeve 100 can, for example, be a tension sleeve or a bushing 102. The first airflow path 56 is located outside the sleeve 100. The sleeve 100 and an interior surface 106 of the mounting hole 26 form a tight fit 108 at at least one circumference 110.

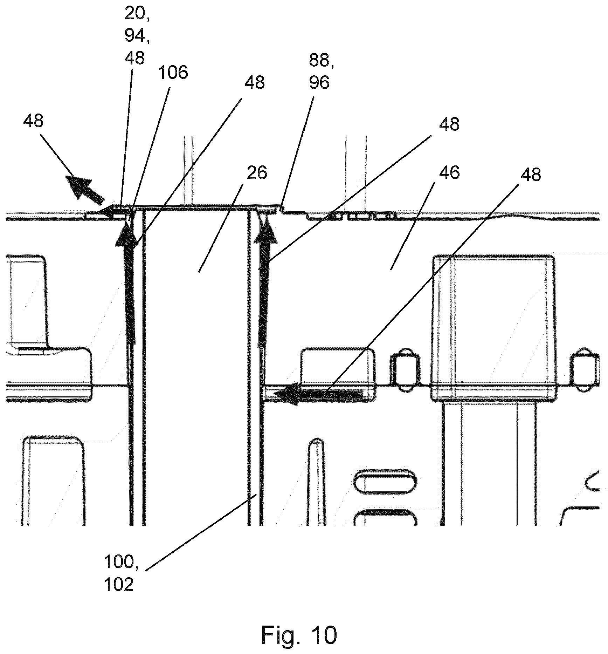

Fig. 10 shows a cross-section of the valve 20 that is similar to the one of Fig. 9, wherein in Fig. 10, no mounting element 24 is positioned in the mounting hole 26. The air 48 flowing through and along the mounting hole 26 is indicated by arrows.

The vent 50 of the valve 20 comprises a second airflow path 94 through the head support 88. The head support 88 is configured as a protrusion 96 of the housing 46.

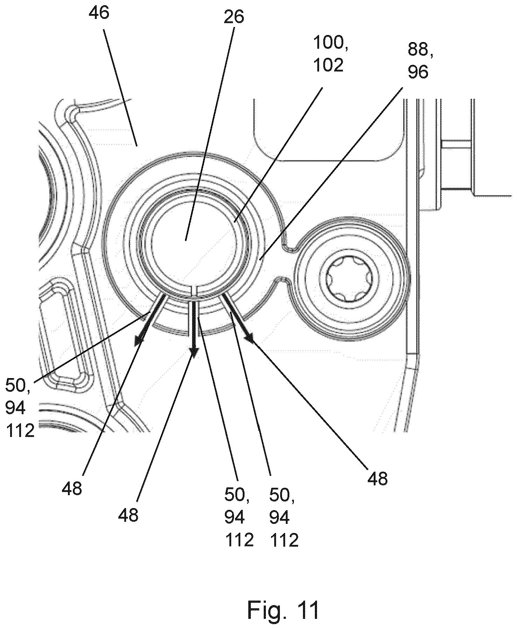

Fig. 11 shows a close-up of the mounting hole 26 from a different perspective. The second airflow path 94 of the vent 50 is defined by a notch 112 in the head support 88. In the present example, the second airflow path 94 is defined by three notches 112 in the head support 88. Each notch 112 is arranged radially with respect to the mounting hole 26. The arrows in Fig. 11 indicate air 48 that is exhausted by the vent 50 of the valve 20 through the second airflow paths 94.

The embodiment described above, in particular the vent leading through the mounting hole, provides for a simple and yet effective solution for exhausting air, while preventing dirt from entering the chamber of the valve. The mounting hole is typically long and comprises a small space between an inner wall of the mounting hole and a mounting element. The amount of dirt that reaches the chamber of the valve is therefore reduced. Furthermore, the mounting hole is typically not completely open at its end. Rather, a head of a mounting element or an opposing structure covers the respective end of the mounting hole which further reduces the amount of dirt reaching the chamber.

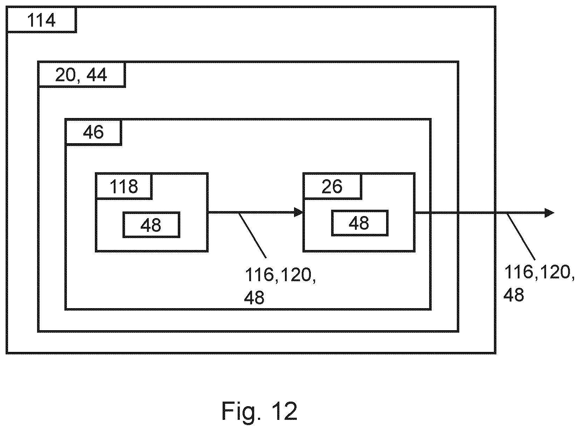

Fig. 12 shows a method 114 for managing airflow 116 in a valve 20. The valve 20 is a pneumatic valve 44. The valve 20 comprises a housing 46, a chamber 118 holding air 48 and a mounting hole 26. The method 114 comprises venting 120 the chamber 118 through and along the mounting hole 26.

Where similar or identical elements are shown in different figures, reference numerals are assigned accordingly. Multiple descriptions of similar or identical elements have been avoided for the sake of clarity. Nevertheless, the embodiments of the figures can be combined with each other and developed further in accordance with the other embodiments and/or their individual features.

### List of references (part of the description)

- 10: vehicle
- 12: tractor-trailer combination
- 14: tractor
- 16: trailer
- 18: commercial vehicle trailer
- 20: valve
- 22: structural element
- 24: mounting element
- 26: mounting hole
- 28: screw
- 30: lift axle
- 32: lift axle control valve
- 34: lift bellow
- 36: axle
- 38: ground
- 40: control unit
- 42: suspension bellows
- 44: pneumatic valve
- 46: housing
- 48: air
- 50: vent
- 52: ambient air
- 56: first airflow path
- 58: solenoid
- 60: solenoid bracket
- 62: first chamber
- 64: piston
- 66: first volume
- 68: motion
- 70: second chamber
- 72: armature
- 74: second volume
- 76: motion
- 78: third airflow path
- 82: top cover
- 84: first borehole
- 86: second drilling hole
- 87: notch
- 88: head support
- 90: head
- 92: screw
- 94: second airflow path
- 96: protrusion
- 98: tapered portion
- 100: sleeve
- 102: bushing
- 106: interior surface
- 108: tight fit
- 110: circumference
- 112: notch
- 114: method
- 116: airflow
- 118: chamber
- 120: venting

## Claims

1. Valve (20), in particular for controlling a lift axle (30) of a vehicle (10),
wherein the valve (20) is a pneumatic valve (44),
wherein the valve (20) comprises:
a housing (46),
a chamber (62, 70, 118) configured to hold air (48),
a vent (50) for the chamber (62, 70, 118), the vent (50) selectively connecting the chamber (62, 70, 118) with ambient air (52), and a mounting hole (26) in the housing (46),
**characterized in that**
the vent (50) comprises a first airflow path (56) inside and along the mounting hole (26).

2. Valve (20) according to claim 1,
wherein the valve (20) comprises a head support (88) for a head (90) of a mounting element (24) to be positioned in the mounting hole (26),
wherein the vent (50) comprises a second airflow path (94) through the head support (88).

3. Valve (20) according to claim 2,
wherein the head support (88) is configured as a protrusion (96) of the housing (46).

4. Valve (20) according to one of claims 2 to 3,
wherein the second airflow path (94) is defined by a notch (112) in the head support (88).

5. Valve (20) according to claim 4,
wherein the notch (112) is arranged radially with respect to the mounting hole (26).

6. Valve (20) according to one of the preceding claims,
wherein the mounting hole (26) is configured for mounting the valve (20) to a structural element (22), in particular a structural element (22) of a or the vehicle (10),
and/or
wherein the mounting hole (26) comprises at least one tapered portion (98).

7. Valve (20) according to one of the preceding claims,
wherein the valve (20) comprises a sleeve (100) for a mounting element (24) to be positioned in the mounting hole (26),
wherein the sleeve (100) is positioned in the mounting hole (26),
wherein the first airflow path (56) is located outside the bushing (102),
in particular wherein the sleeve (100) and an interior surface (106) of the mounting hole (26) form a tight fit (108) at least at one circumference (110).

8. Valve (20) according to one of the preceding claims,
wherein the valve (20) comprises a piston (64),
wherein the chamber (62) comprises a variable volume (66) limited by the piston (64),
wherein a given motion (68) of the piston (64) changes the volume (66) of the chamber (62),
and/or
wherein the valve (20) comprises a solenoid (58), wherein the vent (50) comprises a third airflow path (78) through the solenoid (58).

9. Valve (20) according to one of the preceding claims,
wherein the valve (20) comprises a solenoid (58) and the chamber (70) is formed within the solenoid (58),
and/or
wherein the valve (20) comprises a solenoid (58), which comprises an armature (72), wherein the chamber (70) is limited by the armature (72),
in particular wherein the chamber (70) comprises a variable volume (74) limited by the armature (72),
wherein a given motion (76) of the armature (72) changes the volume (74) of the chamber (70),
and/or
wherein the valve (20) comprises a solenoid (58), wherein the vent (50) comprises a third airflow path (78) through the solenoid (58).

10. Valve (20) according to one of the preceding claims,
wherein the valve (20) is a lift axle control valve (32).

11. Vehicle (10), in particular a commercial vehicle trailer (18),
the vehicle (10) comprising a valve (20) according to one the preceding claims.

12. Vehicle (10) according to claim 11,
wherein the vehicle (10) comprises a structural element (22),
wherein the valve (20) is mounted to the structural element (22) by a mounting element (24) positioned in the mounting hole (26).

13. Vehicle (10) according to claim 12,
wherein the mounting element (24) comprises a screw (92).

14. Vehicle (10) according to one of claims 11 to 13,
wherein the vehicle (10) comprises a lift axle (30) and
wherein the valve (20) is configured to control the lift axle (30).

15. Method (114) for managing airflow (116) in a valve (20),
in particular wherein the valve (20) is configured in accordance with one of claims 1 to 10,
wherein the valve (20) is a pneumatic valve (44),
wherein the valve (20) comprises:
a housing (46),
a chamber (62, 70, 118) holding air (48) and
a mounting hole (26) in the housing (46),
wherein the method (114) comprises
venting (120) the chamber (118) through and along the mounting hole (26).
